# EUROPEAN PATENT SPECIFICATION

(11) **EP 4 043 112 B1**
(45) Date of publication and mention of the grant of the patent: **02.04.2025**
(21) Application number: 21156783.9
(22) Date of filing: 12.02.2021
(51) Int. Cl.: B09B 3/00

(54) **EXTRACTION VESSEL FOR EXTRACTING RECYCLABLE COMPOUNDS FROM ASH, METHOD AND USE**
EXTRAKTIONSGEFÄSS ZUM EXTRAHIEREN VON RECYCELBAREN VERBINDUNGEN AUS ASCHE, METHODE UND VERWENDUNG
CUVE D'EXTRACTION DE COMPOSÉS RECYCLABLES À PARTIR DES CENDRES, PROCÉDÉ ET UTILISATION

(43) Date of publication of application: 17.08.2022
(73) Proprietor: AIK Technik AG, 6210 Sursee (CH)
(72) Inventor: WÖLM, Fabian, 6210 Sursee (CH)
(74) Representative: Maiwald GmbH

(56) References cited:
- JP-A- 2002 282 668

## Description

The present invention relates to a method and device for washing ash, such as fly ash or sewage sludge ash characterized in extracting recyclable compounds such as heavy metal compounds or phosphorous containing compounds from an aqueous slurry of ash in one or more extraction vessels having a round bottom.

### Technical background

Ash from exhaust gases of incineration processes such as waste incineration or sewage sludge incineration are usually used for land filling or to a lesser extent as additive for cement and concrete in construction industry and road construction.

Due to higher environmental constrains especially in Europe but also increasingly in other countries around the world ash underlies governmental regulations especially regarding the content of potentially environmentally harmful components such as heavy metal compounds. Therefore, in order to avoid costly treatment of the ash as hazardous waste the ash must be treated in order to reduce the amount of said potentially environmentally harmful components. Additionally, ash is a source for other valuable compounds such as phosphorous containing compounds, which can be transformed into fertilizers.

One established method of reducing the amounts of recyclable compounds, such as heavy metal compounds, e.g. mercury, lead, cadmium, copper and zinc, or phosphorous containing compounds, is a wet chemical process called FLUWA, in which the heavy metal compounds are extracted from the ash by solving them in water or acidic water (Bühler, A; Schlumberger, S.: Schwermetalle aus der Flugasche zurückgewinnen. In: Schenk, K. (Hrsg.): KVA-Rückstände in der Schweiz. Der Rohstoff mit Mehrwert. Bundesamt für Umwelt, Bern, 2010). Thereby, an aqueous slurry of ash and the liquid aqueous medium is provided and mixed in a cascade of two or three extraction vessels in which the recyclable compounds are solved in the liquid aqueous medium and then separated from the residual particulate ash. The solved and separated recyclable compounds can then be recycled from the aqueous solution by precipitation. The extraction vessels used for mixing the slurry and solving the recyclable compounds are generally stirrer tanks having a conical bottom. Thereby, the conical bottom is necessary to introduce the needed mechanical stability of the extraction vessels.

One major problem of the conical shape of the bottom of the extraction vessels is that especially in the lower area of the conical bottom only an insufficient mixing of the slurry is obtained which results in a sedimentation of ash particles, especially of agglomerates of ash particles, at the bottom of the extraction vessel, which need to be removed periodically through an outlet situated at the bottom of the conical bottom of the extraction vessel. As a consequence, the residence time of these sedimented particles in the extraction vessels is reduced to such an extent that the recyclable compounds are insufficiently removed from these particles.

Thus, there is a need in the art for an improved method for washing ash with an increased removal rate for heavy metal components.

JP 2002-282668 discloses a storing vessel, in which comprises a cylindrical slurry tank in which incinerated fly ash slurry is stored in pumpable state.

It has surprisingly been found that the removal rate for recyclable components can be significantly increased by using at least one extraction vessel having a round bottom instead of a conical bottom.

### Summary of the invention

In one aspect the present invention relates to a method for washing ash comprising the steps of:
a) collecting ash of an incineration process;
b) combining the ash with an aqueous medium to provide an aqueous slurry;
c) mixing the aqueous slurry for solving recyclable compounds from the solid ash particles;
d) separating an aqueous liquid stream containing solved recyclable compounds from a stream containing the residual solid ash particles; wherein
the aqueous slurry is mixed in at least one extraction vessel, characterized in that the at least one extraction vessel has a round bottom instead of a conical bottom.

In another aspect the present invention relates to a device for washing ash comprising:
- a storage vessel for storing ash of an incineration process;
- at least one extraction vessel;
- a feeding line from the storage vessel connected to the upper part of at least one extraction vessel, preferably of the first upstream extraction vessel, for feeding ash from the storage vessel to the at least one, preferably to the first upstream extraction vessel;
- a feeding line connected to the upper part of at least one, preferably of the first upstream extraction vessel, for feeding an aqueous solution to the at least one, preferably to the first upstream extraction vessel;
- a stirring device for mixing the aqueous slurry of ash and aqueous solution situated in the at least one extraction vessel, preferably in each of the extraction vessels;
- a line for removing the aqueous slurry from the at least one extraction vessel, preferably the last downstream extraction vessel, to means for separating an aqueous liquid stream containing solved recyclable compounds from a stream containing the residual solid ash particles;
- means for separating an aqueous liquid stream containing solved recyclable compounds from a stream containing the residual solid ash particles being selected from means for filtration, sedimentation, decantation, centrifugation, distillation, extraction, precipitation or evaporation;
characterized in that
the at least one extraction vessel, preferably all extraction vessels, has/have a round bottom instead of a conical bottom.

In yet another aspect the present invention relates to the use of at least one extraction vessel having a round bottom instead of a conical bottom for improving the extraction rate of solved recyclable compounds in the method and/or the device as described above or below.

In still another aspect the present invention relates to the use of at least one extraction vessel having a round bottom instead of a conical bottom for reducing the sedimentation of agglomerates of solid ash particles at the bottom of the at least one extraction vessel in the method and/or the device as described above or below.

Thereby, a round bottom is to be delimited from a conical bottom by having a round convex shape in relation to the main body of the vessel in contrast to a conical shape tapering downwards in relation to the main body of the vessel.

Suitable round bottoms of the extraction vessel are torispherical bottoms (e.g. according to DIN 28011), elliptical bottoms, semi-elliptical bottoms (e.g. according to DIN 28013), dished bottoms (e.g. according to EN 12285-1 or DIN 6608-1 and DIN 6616) or spherical bottoms.

It has surprisingly been found that in the at least one extraction vessel having a round bottom a more uniform mixing is obtained which reduces the sedimentation of particles at the bottom of the extraction vessel. As a consequence a more thorough mixing and extraction of the recyclable compounds is obtained. A lesser amount of agglomerates has to be periodically removed from the bottom of the extraction device. In some embodiments almost no or even no sedimentation of agglomerates is observed.

### Detailed description of the invention

### Method

In a first aspect the present invention relates to a method for washing ash comprising the steps of:
a) collecting of an incineration process;
b) combining the ash with an aqueous medium to provide an aqueous slurry;
c) mixing the aqueous slurry for solving recyclable compounds from the solid ash particles;
d) separating an aqueous liquid stream containing solved recyclable compounds from a stream containing the residual solid ash particles; wherein

the aqueous slurry is mixed in at least one extraction vessel, characterized in that
the at least one extraction vessel has a round bottom instead of a conical bottom.

The aqueous slurry can be mixed in one extraction vessel having a round bottom.

It is however preferred that the aqueous slurry is mixed in two to five, such as two, three, four or five extraction vessels, preferably in two or three extraction vessels.

The two to five extraction vessels are preferably connected in series, wherein the aqueous slurry is passed from one extraction vessel to the next extraction vessel.

At least one of the two to five extraction vessels, such as one, two, three, four or five of the extraction vessels, preferably all of the extraction vessels has/have a round bottom.

The at least one extraction vessel, preferably all of the extraction devices, have a stirring device situated inside of its body suitable for mixing the aqueous slurry. The stirring device can have any commercially available form suitable for stirring vessels. Usually the stirring device is a stirring unit comprising one or more arms, usually in form of blades or propellers, attached to a rotating rod situated vertically in the vessel body as such that the arms are free floating within the body of the vessel. Suitable stirring units are propeller stirrers, blade stirrers, paddle stirrers, impeller stirrers, anchor stirrers, cross-arm stirrers or the like.

It is preferred that during the method of the invention the stirring device is continuously working thereby ensuring a continuous mixing of the aqueous slurry.

During mixing the solid ash particles of the aqueous slurry are preferably kept in suspension and thereby allowing recyclable compounds of the ash particles such as the heavy metal compounds and optionally other soluble compounds, such as alkali, earth alkali salts or phosphorous containing compounds, to be solved.

The recyclable compounds can be selected from soluble heavy metal compounds and other soluble compounds.

The heavy metal compounds are preferably compounds comprising lead, cadmium, copper and zinc.

The other soluble compounds are in principle all compounds of the ash particles, which are soluble in water and/or acidic water, preferably alkali and earth alkali salts and phosphorous containing compounds.

The average residence time of the aqueous slurry in one extraction vessel, preferably in each extraction vessel, is independently from 5 min to 300 min, preferably from 10 min to 150 min, more preferably from 12 min to 100 min and most preferably from 15 min to 60 min.

The ash can be combined with the aqueous medium to provide an aqueous slurry in the at least one extraction vessel, preferably one extraction vessel or the first extraction vessel of the extraction vessels connected in series. In said embodiment the ash and the aqueous medium are introduced into the at least one extraction vessel, preferably one extraction vessel or the first upstream extraction vessel of the extraction vessels connected in series, in separate streams.

In another embodiment the ash is combined with the aqueous medium to provide an aqueous slurry before introducing the aqueous slurry into the at least one extraction vessel, preferably one extraction vessel or the first upstream extraction vessel of the extraction vessels connected in series.

The ash and various aqueous media separately or the aqueous slurry, preferably the ash and various aqueous media separately, can be intermittently introduced e.g. by means of a valve or metering device. However, it is preferred that the ash or aqueous slurry, preferably the ash and various aqueous media separately, is introduced continuously.

The aqueous slurry can be intermittently removed e.g. by means of a valve. However, it is preferred that the aqueous slurry is removed continuously by overflow e.g. through an exit in the upper side part of the at least one extraction vessel.

Preferably, the aqueous slurry is continuously introduced into and removed from the at least one extraction vessel.

By introducing and removing the aqueous slurry continuously to and from the at least one extraction vessel a uniform filling level of the at least one extraction vessel can be obtained.

Agglomerates of solid ash particles, if present, are preferably removed from the round bottom of the at least one extraction vessel, preferably from the round bottom of each extraction vessel. It is thereby preferred that the agglomerates are removed periodically. The intermittent period for periodically removing the agglomerates is preferably in the range of from 10 min to 120 min, preferably from 15 min to 45 min, most preferably from 20 min to 60 min.

In the preferred embodiments of the invention only small amounts of agglomerates sediment at the bottom of the at least one extraction vessel. In said embodiment the intermittent period for periodically removing the agglomerates can be up to 600 min or longer. In some embodiments no agglomerates need to be removed.

In the method of the state of the art using extraction vessels with conical bottom for mixing the aqueous slurry the intermittent period for periodically removing the agglomerates is usually about 5 min to 120 min.

The ash is preferably selected from fly ash collected from the incineration of waste, preferably from fly ash collected from the exhaust gas of the incineration of waste or from sewage sludge ash collected from the incineration of sewage sludge, preferably from the exhaust gas or from the fluidized bed furnace of the incineration of sewage sludge.

Usually the ash is collected from filter mediums which are passed by the exhaust gas from the incineration process and which filter the particulate residues from the exhaust gas or precipitate volatile compounds from the exhaust gas.

The ash is usually collected and stored in storage vessels.

Preferably the ash is introduced into the one extraction vessel or the first upstream extraction vessel of two to five extraction vessels connected in series in particulate form, preferably through a feeding line from the storage vessel.

It is preferred that the ash is introduced into the one extraction vessel or the first upstream extraction vessel of two to five extraction vessels connected in series continuously.

The particulate ash is preferably combined with the aqueous medium in said one or first extraction vessel to provide the aqueous slurry.

The aqueous medium is preferably pH neutral water or water comprising an acid preferably selected from HF, HCl, H₂SO₄, HNO₃, H₃PO₄ or mixtures thereof.

In one embodiment the aqueous medium is pH neutral water, i.e. water having a pH of around 7. This means that the water does not include an acid or a base.

In another embodiment the aqueous medium is water comprising an acid. Said acid is preferably selected from HF, HCl, H₂SO₄, HNO₃, H₃PO₄ or mixtures thereof. The aqueous medium thereby can be acidic wastewater which is recycled from a different washing step of the incineration process, such as e.g. the acidic scrubber wastewater which is recycled from the wet flue gas cleaning.

The aqueous medium is preferably introduced into the one extraction vessel or the first upstream extraction vessel of two to five extraction vessels connected in series continuously.

In some embodiments the pH of the aqueous slurry in the one extraction vessel or the first upstream extraction vessel of two to five extraction vessels connected in series is adapted by introducing an alkaline medium into said vessel. The alkaline medium is preferably a lime milk suspension or a NaOH containing aqueous solution.

It is preferred that the alkaline medium is introduced periodically into the one extraction vessel or the first upstream extraction vessel of two to five extraction vessels connected in series.

It is preferred that no other streams are introduced into the downstream extraction vessel(s) of the two to five extraction vessels connected in series with the exception of the aqueous slurry removed from the accordant upstream extraction vessel.

In some embodiments additional aqueous medium can be introduced into said downstream extraction vessel(s). Said additional aqueous medium can be the same or different to the aqueous medium introduced into the first upstream extraction vessel.

The same additional aqueous medium can be introduced to increase dilution of the particulate ash in the aqueous slurry.

A different additional aqueous medium can be introduced either to vary the pH of the aqueous slurry and/or to introduce different acidic ions for increasing the solution of the recyclable compounds.

The additional aqueous medium can be different from the aqueous medium introduced into the first upstream extraction vessel in a different pH and/or in the presence of a different acid or in the presence of a base.

The aqueous slurry is separated into an aqueous liquid stream containing solved recyclable compounds and a stream containing the residual solid ash particles preferably after withdrawing the aqueous slurry from the one extraction vessel or the last downstream extraction vessel of two to five extraction vessels connected in series.

The aqueous liquid stream containing solved recyclable compounds (liquid stream) can be separated from the stream containing the residual solid ash particles (particulate stream) by all suitable means for separating liquids from particulate solids such as filtration, sedimentation, decantation, centrifugation, distillation, extraction, precipitation or evaporation. Usually, the liquid stream is separated from the particulate stream by means of filtration such as vacuum filtration e.g. using a vacuum belt filter.

The liquid stream can then be further processed e.g. by recycling the recyclable compounds e.g. by precipitating the heavy metal compounds and optionally other solved compounds such as alkali or earth alkali salts, or phosphorous containing compounds using suitable methods known in the art.

The precipitated compounds can then be further processed and recycled.

The stream containing the residual solid ash particles can be washed and dried. The resulting ash contains considerably lower amounts of potentially environmentally harmful compounds such as heavy metal compounds and usually meets the requirements of state regulation for use in landfill or construction industry.

### Device

In another aspect the present invention relates to a device for washing ash comprising:
- a storage vessel for storing ash an incineration process;
- at least one extraction vessel;
- a feeding line from the storage vessel connected to the upper part of at least one extraction vessel, preferably of the first upstream extraction vessel, for feeding ash from the storage vessel to the at least one, preferably to the first upstream extraction vessel;
- a feeding line connected to the upper part of at least one, preferably of the first upstream extraction vessel, for feeding an aqueous solution to the at least one, preferably to the first upstream extraction vessel;
- a stirring device for mixing the aqueous slurry of ash and aqueous solution situated in the at least one extraction vessel, preferably in each of the extraction vessels;
- a line for removing the aqueous slurry from the at least one extraction vessel, preferably the last downstream extraction vessel, to means for separating an aqueous liquid stream containing solved recyclable compounds from a stream containing the residual solid ash particles;
- means for separating an aqueous liquid stream containing solved recyclable compounds from a stream containing the residual solid ash particles being selected from means for filtration, sedimentation, decantation, centrifugation, distillation, extraction, precipitation or evaporation;
characterized in that
the at least one extraction vessel, preferably all extraction vessels, has/have a round bottom instead of a conical bottom.

The device according to the invention is preferably adapted for the method of the invention as described above or below.

Preferably, the device comprises two to five, preferably two or three extraction vessels.

The two to five extraction vessels are preferably connected in series, wherein the aqueous slurry is passed from one extraction vessel to the next extraction vessel.

At least one of the two to five extraction vessels, such as one, two, three, four or five of the extraction vessels, preferably all of the extraction vessels has/have a round bottom.

In said embodiment the device additionally comprises a feeding line between an upstream extraction vessel of the extraction vessels connected in series to a downstream extraction vessel of the extraction vessels connected in series for feeding the aqueous slurry from an upstream extraction vessel of the extraction vessels connected in series to a downstream extraction vessel of the extraction vessels connected in series. Preferably the device comprises a feeding line between each of the extraction vessels connected in series as such that the aqueous slurry is fed from the first upstream extraction vessel through the optional further downstream extraction vessel(s) to the last downstream extraction vessel.

The at least one extraction vessel, preferably each extraction vessel, is preferably made from a material which is resistant to abrasion caused by the stirred aqueous slurry and resistant to acid, especially resistant to HF.

It is preferred that the at least one extraction vessel, preferably each extraction vessel, is made from a polyolefin, more preferably from polypropylene.

It is especially preferred that the at least one extraction vessel, preferably each extraction vessel, is preferably made from glass fiber reinforced polypropylene. The glass fibers can be introduced to the polymeric melt of the polypropylene.

In one especially preferred embodiment the at least one extraction vessel, preferably each extraction vessel, is made from polypropylene which is laminated on the outer side the wall of at least a lower part of the extraction vessel with a sheet of glass fiber.

The glass fiber reinforced polypropylene is especially suitable for resisting abrasion, acid and mechanical stress.

The at least one extraction vessel, preferably each extraction vessel, independently has preferably a cylindrical shape with a round bottom.

The top is usually flat and round.

The at least one extraction vessel, preferably each extraction vessel, independently has preferably an inner diameter of the main body of from 1.0 m to 5.0 m, more preferably from 1.5 m to 3.5 m.

The at least one extraction vessel, preferably each extraction vessel, independently has preferably a height of the main body of from 1.0 m to 5.0 m, more preferably from 1.5 m to 3.5 m.

The dimensions of the at least one extraction vessel, i.e. the inner diameter and the height of the main body depend on the throughput and therefore exceed the above described ranges for large devices with exceptional high throughput.

The sheet of glass fiber is preferably laminated on the outer side of the wall at least of the lower part of the at least one extraction vessel, preferably each extraction vessel, such as at least the lower half of the at least one extraction vessel, preferably each extraction vessel, preferably at least the lower two thirds of the at least one extraction vessel, preferably each extraction vessel, most preferably the whole body of the at least one extraction vessel, preferably each extraction vessel.

The feeding line for feeding ash from storage vessel to the at least one, preferably to the one extraction vessel or the first upstream extraction vessel, is connected to the upper part, more preferably the top, of the at least one, preferably to the one extraction vessel or the first upstream extraction vessel.

The feeding line for feeding an aqueous solution to the at least one, preferably to the one extraction vessel or the first upstream extraction vessel, is connected to the upper part, of the at least one, preferably to the one extraction vessel or the first upstream extraction vessel.

In another embodiment the feeding line for feeding ash and the feeding line for feeding an aqueous solution are combined before entering the at least one extraction vessel, such as in an additional upstream vessel. By combining the feeding line for feeding ash and the feeding line for feeding an aqueous solution the aqueous slurry is produced before being introduced into the at least one extraction vessel. In this embodiment the device further comprises a single feeding line for feeding the aqueous slurry to the at least one, preferably to the one extraction vessel or the first upstream extraction vessel. Said single feeding line for feeding the aqueous slurry to the at least one, preferably to the one extraction vessel or the first upstream extraction vessel is preferably connected to the upper part, of the at least one, preferably to the one extraction vessel or the first upstream extraction vessel.

The means for mixing the aqueous slurry of ash and aqueous solution situated in the at least one extraction vessel, preferably in each of the extraction vessels is a stirring device.

The stirring device can have any commercially available form suitable for stirring vessels. Usually the stirring device is a stirring unit comprising one or more arms, usually in form of blades or propellers, attached to a rotating rod situated vertically in the vessel body as such that the arms are free floating within the body of the extraction vessel.

The rotating rod preferably is arranged vertically and vertically extends out of the extraction vessel through the top.

The rotating rod is preferably rotated by a driving device such as a motor situated outside, preferably above the top of the extraction vessel.

Suitable stirring units are propeller stirrers, blade stirrers, paddle stirrers, impeller stirrers, anchor stirrers, cross-arm stirrers or the like.

The rotating velocity of the stirring device is preferably adapted to keep the solid ash particles of the aqueous slurry in suspension.

The feeding line(s) for removing the aqueous slurry from an upstream extraction vessel to a downstream extraction vessel can be situated at any suitable position of the main body of the upstream and downstream extraction vessels. Suitably the feeding line(s) are situated at comparable heights of the main body of the upstream and downstream extraction vessels.

Preferably the at least one extraction vessel, preferably each extraction vessel, comprises means for removing agglomerates of solid ash particles situated at the round bottom of the at least one extraction vessel, preferably each extraction vessel.

The line for removing the aqueous slurry from the at least one extraction vessel, preferably the last downstream extraction vessel, to means for separating an aqueous liquid stream containing solved recyclable compounds from a stream containing the residual solid ash particles can be situated at any suitable position of the main body of the upstream and downstream extraction vessels.

The means for separating an aqueous liquid stream containing solved recyclable compounds from a stream containing the residual solid ash particles are selected from means for filtration, sedimentation, decantation, centrifugation, distillation, extraction, precipitation or evaporation.

It is preferred that the means for separating an aqueous liquid stream containing solved recyclable compounds from a stream containing the residual solid ash particles is a means for filtration such as means for vacuum filtration e.g. a vacuum belt filter.

It is preferred that all embodiments of the device as described above or below also apply for the method of the invention as described above or below.

### Use

In yet another aspect the present invention relates to the use of at least one extraction vessel having a round bottom instead of a conical bottom for improving the extraction rate of solved recyclable compounds in the method and/or the device as described above or below.

In still another aspect the present invention relates to the use of at least one extraction vessel having a round bottom instead of a conical bottom for reducing the sedimentation of agglomerates of solid ash particles at the bottom of the at least one extraction vessel in the method and/or the device as described above or below.

It is preferred that all embodiments of the at least one extraction vessel as well as the method and the device of the invention as described above or below also apply for the uses of said at least one extraction vessel as described above or below.

## Claims

1. A method for washing ash comprising the steps of:
a) collecting ash of an incineration process;
b) combining the ash with an aqueous medium to provide an aqueous slurry;
c) mixing the aqueous slurry for solving recyclable compounds from the solid ash particles;
d) separating an aqueous liquid stream containing solved recyclable compounds from a stream containing the residual solid ash particles;
wherein the aqueous slurry is mixed in at least one extraction vessel
**characterized in that** the at least one extraction vessel has a round bottom instead of a conical bottom.

2. The method according to claim 1, wherein the aqueous slurry is mixed in two to five, preferably two or three extraction vessels connected in series, **characterized in that** at least one, preferably all of the extraction vessel(s) has/have a round bottom.

3. The method according to claims 1 or 2, wherein the aqueous slurry is mixed in the at least one extraction vessel by means of a stirring device situated in the at least one extraction vessel, preferably in each extraction vessel.

4. The method according to any one of the preceding claims, wherein the ash and various aqueous media is introduced and the aqueous slurry is removed from the at least one extraction vessel continuously.

5. The method according to any one of the preceding claims, wherein the average residence time of the aqueous slurry in one extraction vessel, preferably in each extraction vessel, is independently from 5 min to 300 min, preferably from 10 min to 150 min, more preferably from 12 min to 100 min and most preferably from 15 min to 60 min.

6. The method according to any one of the preceding claims, wherein the ash is selected from fly ash collected from the incineration of waste or from sewage sludge ash collected from the incineration of sewage sludge.

7. The method according to any one of the preceding claims, wherein the recyclable compounds are selected from heavy metal compounds, such as compounds comprising lead, cadmium, copper and zinc, and other compounds soluble in water or acidic water, such as alkali and earth alkali salts and phosphorous containing compounds.

8. The method according to any one of the preceding claims, wherein aqueous medium is pH neutral water or water comprising an acid preferably selected from HF, HCl, H₂SO₄, HNO₃, H₃PO₄ or mixtures thereof.

9. A device for washing ash comprising:
- a storage vessel for storing ash of an incineration process;
- at least one extraction vessel;
- a feeding line from the storage vessel connected to the upper part of at least one extraction vessel, preferably of the first upstream extraction vessel, for feeding ash from the storage vessel to the at least one, preferably to the first upstream extraction vessel;
- a feeding line connected to the upper part of at least one, preferably of the first upstream extraction vessel, for feeding an aqueous solution to the at least one, preferably to the first upstream extraction vessel;
- a stirring device for mixing the aqueous slurry of ash and aqueous solution situated in the at least one extraction vessel, preferably in each of the extraction vessels;
- a line from the at least one extraction vessel, preferably the last downstream extraction vessel to means for separating an aqueous liquid stream containing solved recyclable compounds from a stream containing the residual solid ash particles for removing the aqueous slurry from the at least one extraction vessel, preferably the last downstream extraction vessel, to means for separating an aqueous liquid stream containing solved recyclable compounds from a stream containing the residual solid ash particles;
- means for separating an aqueous liquid stream containing solved recyclable compounds from a stream containing the residual solid ash particles being selected from means for filtration, sedimentation, decantation, centrifugation, distillation, extraction, precipitation or evaporation;
**characterized in that**
the at least one extraction vessel, preferably all extraction vessels, has/have a round bottom instead of a conical bottom.

10. The device according to claim 9 comprising two to five, preferably two or three extraction vessels connected in series, **characterized in that** at least one, preferably all of the extraction vessel(s) has/have a round bottom, and a feeding line between an upstream extraction vessel of the extraction vessels connected in series to a downstream extraction vessel of the extraction vessels connected in series for feeding the aqueous slurry from an upstream extraction vessel of the extraction vessels connected in series to a downstream extraction vessel of the extraction vessels connected in series.

11. The device according to claim 9 or 10, wherein the at least one extraction vessel, preferably each extraction vessel, is made of polypropylene or glass fiber, preferably glass fiber reinforced polypropylene, most preferably of polypropylene which is laminated on the outer side of the wall of at least a lower part of the extraction vessel with a sheet of glass fiber.

12. The device according to any one of claims 9 to 11, wherein the at least one extraction vessel, preferably each extraction vessel has an inner diameter of from 1.0 m to 5.0 m, preferably from 1.5 m to 3.5 m.

13. The device according to any one of claims 9 to 12, wherein the at least one extraction vessel, preferably each extraction vessel has a height of the main body of from 1.0 m to 5.0 m, preferably from 1.5 m to 3.5 m.

14. The use of at least one extraction vessel having a round bottom instead of a conical bottom for improving the extraction rate of solved recyclable compounds in the method and/or device of any one of claims 1 to 13.

15. The use of at least one extraction vessel having a round bottom instead of a conical bottom for reducing the sedimentation of agglomerates of solid ash particles at the bottom of the at least one extraction vessel in the method and/or device of any one of claims 1 to 13.

## Patentansprüche

1. Verfahren zum Waschen von Asche, das die folgenden Schritte umfasst:
a) Sammeln von Asche aus einem Verbrennungsprozess;
b) Kombinieren der Asche mit einem wässrigen Medium, um eine wässrige Aufschlämmung zu erhalten;
c) Mischen der wässrigen Aufschlämmung zum Lösen von wiederverwertbaren Verbindungen aus den festen Aschepartikeln;
d) Abtrennen eines wässrigen Flüssigkeitsstroms, der gelöste wiederverwertbare Verbindungen enthält, von einem Strom, der die restlichen festen Aschepartikel enthält;
wobei die wässrige Aufschlämmung in mindestens einem Extraktionsbehälter gemischt wird
**dadurch gekennzeichnet, dass** der mindestens eine Extraktionsbehälter einen runden Boden anstelle eines konischen Bodens aufweist.

2. Verfahren nach Anspruch 1, bei dem die wässrige Aufschlämmung in zwei bis fünf, vorzugsweise zwei oder drei in Reihe geschalteten Extraktionsbehältern gemischt wird, **dadurch gekennzeichnet, dass** mindestens ein, vorzugsweise alle Extraktionsbehälter einen runden Boden haben.

3. Verfahren nach Anspruch 1 oder 2, wobei die wässrige Aufschlämmung in dem mindestens einen Extraktionsbehälter mit Hilfe einer Rührvorrichtung, die sich in dem mindestens einen Extraktionsbehälter, vorzugsweise in jedem Extraktionsbehälter, befindet, vermischt wird.

4. Verfahren nach einem der vorhergehenden Ansprüche, wobei die Asche und die verschiedenen wässrigen Medien kontinuierlich eingeleitet werden und die wässrige Aufschlämmung kontinuierlich aus dem mindestens einen Extraktionsbehälter entfernt wird.

5. Verfahren nach einem der vorhergehenden Ansprüche, wobei die durchschnittliche Verweilzeit der wässrigen Aufschlämmung in einem Extraktionsbehälter, vorzugsweise in jedem Extraktionsbehälter, unabhängig voneinander von 5 min bis 300 min, bevorzugt von 10 min bis 150 min, noch bevorzugter von 12 min bis 100 min und am meisten bevorzugt von 15 min bis 60 min beträgt.

6. Verfahren nach einem der vorhergehenden Ansprüche, wobei die Asche aus Flugasche, die bei der Verbrennung von Abfällen gesammelt wird, oder aus Klärschlammasche, die bei der Verbrennung von Klärschlamm gesammelt wird, ausgewählt wird.

7. Verfahren nach einem der vorhergehenden Ansprüche, wobei die recycelbaren Verbindungen aus Schwermetallverbindungen, wie Verbindungen, die Blei, Cadmium, Kupfer und Zink enthalten, und anderen in Wasser oder saurem Wasser löslichen Verbindungen, wie Alkali- und Erdalkalisalzen und phosphorhaltigen Verbindungen, ausgewählt werden.

8. Verfahren nach einem der vorhergehenden Ansprüche, wobei das wässrige Medium pH-neutrales Wasser oder Wasser ist, das eine Säure enthält, die vorzugsweise aus HF, HCl, H₂SO₄, HNO₃, H₃PO₄ oder Mischungen davon ausgewählt ist.

9. Vorrichtung zum Waschen von Asche, enthaltend:
- ein Lagerbehälter zur Lagerung von Asche aus einem Verbrennungsprozess;
- mindestens ein Extraktionsbehälter;
- eine Zuführungsleitung vom Lagerbehälter, die mit dem oberen Teil mindestens eines Extraktionsbehälters, vorzugsweise des ersten stromaufwärts gelegenen Extraktionsbehälters, verbunden ist, um Asche aus dem Lagerbehälter in den mindestens einen, vorzugsweise in den ersten stromaufwärts gelegenen Extraktionsbehälter zu leiten;
- eine Zuführungsleitung, die mit dem oberen Teil mindestens eines, vorzugsweise des ersten stromaufwärts gelegenen Extraktionsbehälters verbunden ist, um dem mindestens einen, vorzugsweise dem ersten stromaufwärts gelegenen Extraktionsbehälter eine wässrige Lösung zuzuführen;
- eine Rührvorrichtung zum Mischen der wässrigen Aufschlämmung von Asche und wässriger Lösung, die sich in dem mindestens einen Extraktionsbehälter, vorzugsweise in jedem der Extraktionsbehälter, befindet;
- eine Leitung von dem mindestens einen Extraktionsbehälter, vorzugsweise dem letzten stromabwärts gelegenen Extraktionsbehälter, zu einer Einrichtung zum Trennen eines wässrigen Flüssigkeitsstroms, der gelöste wiederverwertbare Verbindungen enthält, von einem Strom, der die restlichen festen Aschepartikel enthält, zum Entfernen der wässrigen Aufschlämmung aus dem mindestens einen Extraktionsbehälter, vorzugsweise dem letzten stromabwärts gelegenen Extraktionsbehälter, zu einer Einrichtung zum Trennen eines wässrigen Flüssigkeitsstroms, der gelöste wiederverwertbare Verbindungen enthält, von einem Strom, der die restlichen festen Aschepartikel enthält;
- eine Einrichtung zur Abtrennung eines wässrigen Flüssigkeitsstroms, der gelöste wiederverwertbare Verbindungen enthält, von einem Strom, der die restlichen festen Aschepartikel enthält, ausgewählt aus Einrichtungen zur Filtration, Sedimentation, Dekantierung, Zentrifugation, Destillation, Extraktion, Ausfällung oder Verdampfung;
**dadurch gekennzeichnet, dass**
das mindestens eine Extraktionsbehälter, vorzugsweise alle Extraktionsbehälter, einen runden Boden anstelle eines konischen Bodens hat/haben.

10. Vorrichtung nach Anspruch 9, umfassend zwei bis fünf, vorzugsweise zwei oder drei in Reihe geschaltete Extraktionsbehälter, **dadurch gekennzeichnet, dass** mindestens ein, vorzugsweise alle Extraktionsbehälter einen runden Boden aufweisen, und eine Zuführungsleitung zwischen einem stromaufwärts gelegenen Extraktionsbehälter der in Reihe geschalteten Extraktionsbehälter und einem stromabwärts gelegenen Extraktionsbehälter der in Reihe geschalteten Extraktionsbehälter zum Zuführen der wässrigen Aufschlämmung von einem stromaufwärts gelegenen Extraktionsbehälter der in Reihe geschalteten Extraktionsbehälter zu einem stromabwärts gelegenen Extraktionsbehälter der in Reihe geschalteten Extraktionsbehälter.

11. Vorrichtung nach Anspruch 9 oder 10, wobei der mindestens eine Extraktionsbehälter, vorzugsweise jeder Extraktionsbehälter, aus Polypropylen oder Glasfaser, vorzugsweise aus glasfaserverstärktem Polypropylen, am meisten bevorzugt aus Polypropylen, das an der Außenseite der Wand mindestens eines unteren Teils des Extraktionsbehälters mit einer Glasfaserfolie laminiert ist, hergestellt ist.

12. Vorrichtung nach einem der Ansprüche 9 bis 11, wobei der mindestens eine Extraktionsbehälter, vorzugsweise jeder Extraktionsbehälter, einen Innendurchmesser von 1,0 m bis 5,0 m, vorzugsweise von 1,5 m bis 3,5 m, aufweist.

13. Vorrichtung nach einem der Ansprüche 9 bis 12, wobei der mindestens eine Extraktionsbehälter, vorzugsweise jeder Extraktionsbehälter, eine Höhe des Hauptkörpers von 1,0 m bis 5,0 m, vorzugsweise von 1,5 m bis 3,5 m aufweist.

14. Verwendung mindestens eines Extraktionsbehälters mit rundem Boden anstelle eines konischen Bodens zur Verbesserung der Extraktionsrate von gelösten wiederverwertbaren Verbindungen in dem Verfahren und/oder der Vorrichtung nach einem der Ansprüche 1 bis 13.

15. Verwendung mindestens eines Extraktionsbehälters mit einem runden Boden anstelle eines konischen Bodens zur Verringerung der Sedimentation von Agglomeraten fester Aschepartikel am Boden des mindestens einen Extraktionsbehälters in dem Verfahren und/oder der Vorrichtung nach einem der Ansprüche 1 bis 13.

## Revendications

1. Procédé de lavage de cendres comprenant les étapes consistant à :
a) collecter des cendres d'un processus d'incinération ;
b) combiner les cendres avec un milieu aqueux pour obtenir une suspension aqueuse ;
c) mélanger la suspension aqueuse pour dissoudre des composés recyclables provenant des particules de cendres solides ;
d) séparer un flux liquide aqueux contenant des composés recyclables dissous d'un flux contenant les particules de cendres solides résiduelles ;
dans lequel la suspension aqueuse est mélangée dans au moins une cuve d'extraction, **caractérisé en ce que** l'au moins une cuve d'extraction a un fond rond au lieu d'un fond conique.

2. Procédé selon la revendication 1, dans lequel la suspension aqueuse est mélangée dans deux à cinq, de préférence deux ou trois cuves d'extraction reliées en série, **caractérisé en ce qu'**au moins une, de préférence toutes les cuves d'extraction a/ont un fond rond.

3. Procédé selon les revendications 1 ou 2, dans lequel la suspension aqueuse est mélangée dans l'au moins une cuve d'extraction au moyen d'un dispositif d'agitation situé dans l'au moins une cuve d'extraction, de préférence dans chaque cuve d'extraction.

4. Procédé selon l'une des revendications précédentes, dans lequel les cendres et divers milieux aqueux sont introduits et la suspension aqueuse est retirée de l'au moins une cuve d'extraction en continu.

5. Procédé selon l'une des revendications précédentes, dans lequel le temps de séjour moyen de la suspension aqueuse dans une cuve d'extraction, de préférence dans chaque cuve d'extraction, est indépendamment de 5 min à 300 min, préférablement de 10 min à 150 min, plus préférablement encore de 12 min à 100 min et le plus préférablement entre toutes de 15 min à 60 min.

6. Procédé selon l'une des revendications précédentes, dans lequel les cendres sont sélectionnées parmi des cendres volantes collectées lors de l'incinération de déchets ou parmi des cendres de boues d'épuration collectées lors de l'incinération de boues d'épuration.

7. Procédé selon l'une des revendications précédentes, dans lequel les composés recyclables sont sélectionnés parmi des composés de métaux lourds, tels que des composés comprenant du plomb, du cadmium, du cuivre et du zinc, et d'autres composés solubles dans l'eau ou l'eau acide, tels que des sels alcalins et alcalino-terreux et des composés contenant du phosphore.

8. Procédé selon l'une des revendications précédentes, dans lequel le milieu aqueux est de l'eau à pH neutre ou de l'eau comprenant un acide de préférence sélectionné parmi HF, HCl, H₂SO₄, HNO₃, H₃PO₄ ou des mélanges de ceux-ci.

9. Dispositif de lavage de cendres comprenant :
- une cuve de stockage pour stocker des cendres d'un processus d'incinération ;
- au moins une cuve d'extraction ;
- une tuyauterie d'alimentation partant de la cuve de stockage reliée à la partie supérieure d'au moins une cuve d'extraction, de préférence de la première cuve d'extraction en amont, pour amener des cendres de la cuve de stockage à l'au moins une cuve d'extraction, de préférence la première cuve d'extraction en amont ;
- une tuyauterie d'alimentation reliée à la partie supérieure d'au moins une cuve d'extraction, de préférence de la première cuve d'extraction en amont, pour amener une solution aqueuse vers l'au moins une cuve d'extraction, de préférence vers la première cuve d'extraction en amont ;
- un dispositif d'agitation pour mélanger la suspension aqueuse de cendres et la solution aqueuse situées dans l'au moins une cuve d'extraction, de préférence dans chacune des cuves d'extraction ;
- une tuyauterie allant de l'au moins une cuve d'extraction, de préférence la dernière cuve d'extraction en aval, à des moyens de séparation d'un flux liquide aqueux contenant des composés recyclables dissous d'un flux contenant les particules de cendres solides résiduelles pour retirer la suspension aqueuse de l'au moins une cuve d'extraction, de préférence la dernière cuve d'extraction en aval, et l'amener vers des moyens de séparation d'un flux liquide aqueux contenant des composés recyclables dissous d'un flux contenant les particules de cendres solides résiduelles ;
- des moyens de séparation d'un flux liquide aqueux contenant des composés recyclables dissous d'un flux contenant les particules de cendres solides résiduelles choisis parmi des moyens de filtration, de sédimentation, de décantation, de centrifugation, de distillation, d'extraction, de précipitation ou d'évaporation ;
caractérisé en ce
l'au moins une cuve d'extraction, de préférence toutes les cuves d'extraction, a/ont un fond rond au lieu d'un fond conique.

10. Dispositif selon la revendication 9 comprenant deux à cinq, de préférence deux ou trois cuves d'extraction reliées en série, **caractérisé en ce qu'**au moins une, de préférence toutes les cuves d'extraction a/ont un fond rond, et une tuyauterie d'alimentation entre une cuve d'extraction en amont parmi les cuves d'extraction reliées en série et une cuve d'extraction en aval parmi les cuves d'extraction reliées en série pour amener la suspension aqueuse d'une cuve d'extraction en amont parmi les cuves d'extraction reliées en série à une cuve d'extraction en aval parmi les cuves d'extraction reliées en série.

11. Dispositif selon la revendication 9 ou 10, dans lequel l'au moins une cuve d'extraction, de préférence chaque cuve d'extraction, est en polypropylène ou en fibre de verre, de préférence en polypropylène renforcé de fibre de verre, de manière préférée entre toutes en polypropylène qui est stratifié sur le côté extérieur de la paroi d'au moins une partie inférieure de la cuve d'extraction avec une feuille de fibre de verre.

12. Dispositif selon l'une des revendications 9 à 11, dans lequel l'au moins une cuve d'extraction, de préférence chaque cuve d'extraction a un diamètre intérieur de 1,0 m à 5,0 m, de préférence de 1,5 m à 3,5 m.

13. Dispositif selon l'une des revendications 9 à 12, dans lequel l'au moins une cuve d'extraction, de préférence chaque cuve d'extraction a une hauteur du corps principal de 1,0 m à 5,0 m, de préférence de 1,5 m à 3,5 m.

14. Utilisation d'au moins une cuve d'extraction ayant un fond rond au lieu d'un fond conique pour améliorer le taux d'extraction de composés recyclables dissous dans le procédé et/ou le dispositif selon l'une des revendications 1 à 13.

15. Utilisation d'au moins une cuve d'extraction ayant un fond rond au lieu d'un fond conique pour réduire la sédimentation d'agglomérats de particules de cendres solides au fond de l'au moins une cuve d'extraction dans le procédé et/ou le dispositif selon l'une des revendications 1 à 13.
